# EUROPEAN PATENT SPECIFICATION

(11) **EP 3 071 998 B1**
(45) Date of publication and mention of the grant of the patent: **30.01.2019**
(21) Application number: 14863583.2
(22) Date of filing: 17.11.2014
(51) Int. Cl.: G01S 13/88, G01S 13/87, G01S 13/00, E05G 5/00, G01S 13/89, G07C 9/02

(54) **ACTIVE MICROWAVE DEVICE AND DETECTION METHOD**
AKTIVE MIKROWELLENVORRICHTUNG UND DETEKTIONSVERFAHREN
DISPOSITIF ACTIF À MICRO-ONDES ET PROCÉDÉ DE DÉTECTION

(30) Priority: 19.11.2013 US 201361905940 P; 22.01.2014 US 201414160895; 28.02.2014 US 201461945921 P; 23.04.2014 US 201414259603; 30.06.2014 US 201414319222
(43) Date of publication of application: 28.09.2016
(73) Proprietor: Apstec Systems USA LLC, Owings Mills, MD 21117 (US)
(72) Inventor: KUZNETSOV, Andrey, St. Petersburg 194223 (RU); AVERYANOV, Valery, St. Petersburg 195221 (RU); GORSHKOV, Igor, St. Petersburg 199178 (RU)
(74) Representative: Best, Michael
(86) International application number: PCT/US2014/065881
(87) International publication number: WO 2015/077168

(56) References cited:
- US-A1- 2005 110 672
- US-A1- 2011 181 300
- US-A1- 2013 022 237
- US-A1- 2013 033 574
- US-B1- 6 967 612
- US-B2- 8 159 534

## Description

### FIELD OF THE INVENTION

This invention relates to the field of remote detection of hidden objects, particularly to methods and apparatuses for detection of dielectric explosive substances concealed under clothes or otherwise on or near the human body.

### BACKGROUND OF THE INVENTION

Currently, various methods are being used to combat the concern regarding concealed explosive substances. Some of these methods include: metal detectors, vapor detectors, X-ray machines, and dogs. Many countries are putting forth great efforts in developing new methods for inspection of the human body based on new physical principles including: Raman backscattering, dielectric portals, passive and active terahertz range devices, passive millimeter range radars, and active microwave portals.

The aforementioned methods do not guarantee the required effectiveness of remote and covert inspection; thus, these devices are not capable of detecting a "suicide bomber" in adequate time so that the necessary precautions can be taken before detonation of the explosive device occurs. Another notable disadvantage of the current methods is the lack of automatic determination of the threat level of a detected object as well as a high false alarm rate. These obstacles make it nearly impossible to use such devices, e.g., for inspection of a large number of people moving in transit.

One current method of detection used for metallic and non-metallic explosive devices concealed on a person is as follows: The receiving antenna focuses on a small area of the human body using electromagnetic waves coming from that region. A radiometer data is then processed in a processing module, and the intensity and position of the beam is recorded. The measured intensity of the received signal is then displayed as luminous intensity. By analyzing the distribution of the luminous intensity, the presence or absence of metallic or non-metallic objects can be determined. The main disadvantage of this method is the low contrast of the received image. This method cannot clearly distinguish non-metallic objects from the human body while the dielectric for the used wave range is transparent.

WO 2011/065869 and WO 2011/065868 disclose a method for detecting hidden explosives on a person using a microwave image and an optical image of this person and the high dielectric constant of most explosives. These methods make no use of the MW signal reflected from an outer layer of an interrogated space for unveiling hidden objects in an interrogated space. US 2013/033574 A1 discloses method and system for unveiling hidden dielectric objects in an interrogated area, the method comprising recording a 3D microwave and a 3D optical range images of an interrogated scene at the same time moment, digitizing all images and overlapping them in one common coordinate system; determining a space between the microwave and optical image, calculating a dielectric permittivity c of the space; and concluding the absence of hidden dielectric object where the dielectric permittivity is less than a threshold value.

There is further need for covert automatic (without operator) inspection of a crowd of moving people to unveil suicide bombers and separate them from the crowd.

### SUMMARY OF THE INVENTION

This invention discloses a method and system for locating potentially threatening hidden objects, such as explosives, e.g. worn on or carried by a person. By sending microwave signals and receiving the reflections of those signals off of different areas of the person, the distance between an outer layer (i.e. outer garment) and the body of the person can be calculated. Simultaneously, if an object is hidden on the person, the thickness of the object is also calculated. These values are compared and used to create a 3D microwave image, and if a sharp change between the values is detected, an alarm is signaled. The sharp change is due to the increased dielectric permittivity constant of certain dielectrics used for explosives and other dangerous weapons, which changes the speed at which the microwave signal is transmitted. This invention also discloses a similar method of detection by placing microwave signal emitters across from signal receivers, thus also allowing for calculations based on the transmission of microwave signals. Additionally, a 3D video image of the same point in time can overlap the 3D microwave image, thus allowing for more accurate readings and results.

### BRIEF DESCRIPTION OF THE DRAWINGS

Fig. 1 shows the setup for detection of hidden dielectric objects.
Fig. 2 shows the microwave path and reflection off a target's coat and body boundaries (first and second boundaries, respectively).
Fig. 3 further details a microwave (MW) beam's reflection in (a) the absence, and (b), (c), (d) the presence of hidden dangerous objects. Fig. 3 (b) shows an example of the location of explosives on the human body under the coat or other garment. Fig. 3(c) and 3(d) show the optical paths and distances measured or calculated by the claimed invention in the case of hidden objects.
Fig. 4 shows an example of the process used for 3D microwave and video image processing and automatic alarm.
Fig. 5 shows the plane configuration option of the present invention.
Fig. 6 shows the portal configuration option of the present invention in (a) reflection mode, and (b) transmission mode.
Fig. 7 shows different manners of constructing microwave images in the portal configuration option of the present invention.
Fig. 8 shows the portal configuration option of the present invention using a double number of emitting/receiving antenna arrays.
Fig. 9 shows the plane configuration option of the present invention using a double number of emitting/receiving antenna arrays.
Fig. 10 shows an example of how the plane and portal configuration options can be used together simultaneously.
Fig. 11 shows another example of how the plane and portal configuration options can be used together simultaneously.

### DETAILED DESCRIPTION OF THE PREFERRED EMBODIMENT

Disclosed herein is an Active Microwave Device (AMD) for stand-off real-time automatic detection of IEDs (Improvised Explosive Devices) and other potentially dangerous dielectric objects worn on the body and hidden under clothing or in a back-pack or other luggage. The AMD operates by sending microwaves (ranging in wavelength from 1 millimeter to about 20 centimeters, with the preferred embodiment using microwaves ranging from 1 mm to a few cm) towards a moving target (e.g., a person), and detecting the reflected waves afterwards. The data analysis is carried out in real time by high-speed GPUs to obtain the image of a potentially hidden object and receive information about its volume and dielectric properties, which allows distinguishing between a common object and a potential explosive. This information is then used to automatically assign a threat level to the found 'anomaly' without an operator's involvement.

A system for unveiling a hidden dielectric object in an interrogated area is thus claimed in claim 14, the system comprising at least two microwave (MW) sources and at least one MW receiver forming 3D MW images of the interrogated area, wherein said 3D microwave images are formed by emitting MW signals from the MW sources towards an interrogated person (20), where each MW signal partially reflects off a first boundary between air and an intermediary space and a remainder of the MW signals travels through the intermediary space, where the remainder of the MW signals almost fully reflects off a second boundary between the intermediary space and a human body of the interrogated person (20), where said MW receiver receives reflected signals from said first and second boundaries, further comprising a computer/calculator for determining at least two optical paths, P1 and P2, between at least two sets of two points, where P1=(A2-A1) and P2=(B2-B1); wherein A1 is a point of a first MW beam reflected from the first boundary, and A2 is a point of the same first MW beam reflected from the second boundary, wherein B1 is a point of a second MW beam reflected from the first boundary, and B2 is a point of the same second MW beam reflected from the second boundary, wherein the optical path is a path of microwave radiation in an intermediary space medium; and an alarm for signaling a likelihood of a hidden dielectric object between the first and second boundaries, if the difference between P1 and P2 is greater than a threshold value due to an increased dielectric constant in the intermediary space between points B2 and B1.

Also, a method for unveiling hidden dielectric objects in an interrogated space is claimed in claim 1, the method comprising sending microwave (MW) signals from at least two MW sources towards an interrogated person (20), the signal being partially reflected on a first boundary between air and an outer layer of an intermediary space, the remainder of the signal being almost fully reflected on a second boundary between the intermediary space and a human body, receiving at a MW receiver a first and a second response of MW signals reflected back from the first boundary and the second boundary; the first and the second response signals being a first and a second 3D MW images of the interrogated person (20), determining at least two optical paths, P1 and P2, between at least two sets of two points, where P1=(A2-A1) and P2=(B2-B1); where A1 is a point of a first MW beam reflecting from the first boundary and A2 is a point of the same first beam reflecting from the second boundary, where B1 is a point of a second MW beam reflecting from the first boundary and B2 is a point of the same second MW beam reflecting from the second boundary, wherein the optical path is a path of microwave radiation in a medium of the intermediary space; determining a presence of a hidden dielectric object between the first and second boundaries if the difference between P1 and P2 is greater than a threshold value due to an increased dielectric constant in the intermediary space between B2 and B1. In one embodiment, the method further comprises forming at least a third and a fourth 3D MW image from a third and a fourth response signal; wherein the third and the fourth response signals are received from an angle different from that of the first and the second response signals, and determining at least two more optical paths, P3 and P4, where P3=(C2-C1) and P4=(D2-D1), where C1 is a point of a third MW beam reflecting from the first boundary and C2 is a point of the same third beam reflecting from the second boundary, where D1 is a point of a fourth MW beam reflecting from the first boundary, and D2 is a point of the same fourth MW beam reflecting from the second boundary thus increasing image quality and adding information for determining the presence of hidden dielectric objects. P3 and P4 can be used to increase reliability of an alarm triggered when the difference between P1 and P2 is greater than the threshold value. P3 and P4 can be determined in essentially the same area where P1 and P2 are determined, but using different viewing angels. P3 and P4 can also be used to detect further hidden objects in a different area than where P1 and P2 are determined.

The intermediary space can be between the body of a person and the clothing of this person or between two layers of clothing of a person. The first boundary is preferably formed by the boundary between air and the outer clothing of a person.

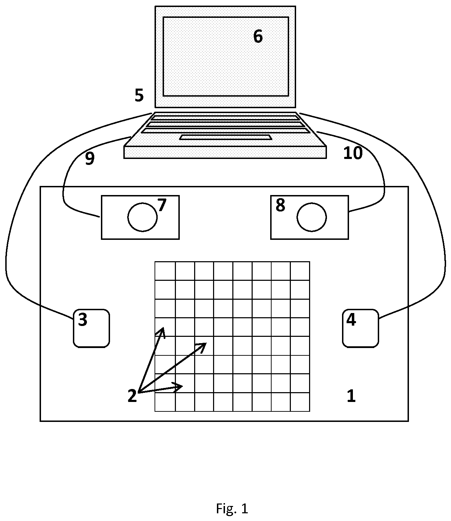

A setup **1** for unveiling hidden dielectric objects is shown in Fig. 1. In one embodiment, the space is scanned with microwave radiation using two or more elemental microwave emitters **2** (Fig. 1 shows 64 emitters, as an example). The signal reflected from the monitored area is picked up by one or more parallel detection channels **3** and **4.** The received signal undergoes coherent processing in a digital signal processing (DSP) unit **5** to obtain maximum intensity values of the restored configuration of scattering objects in the monitored area, depending on the distance from the elemental emitters to the target. The information obtained after processing is then displayed on the display **6** by constructing 3D microwave images.

In one embodiment of the method of the invention, a digital signal processor (DSP) performs a coherent processing, which calculates the 3D MW images, taking into account amplitude information and phase information of electromagnetic fields reflected from an interrogated person.

In another embodiment, an additional video image of the target is also obtained using two or more video cameras **7** and **8,** which are synchronized with the microwave emitters **2** via the DSP unit **5.** The obtained video images are transmitted via channels **9** and **10** into the processing unit **5,** they are further converted into digital form, and a three-dimensional image of the target is constructed and shown on the display **6.** The 3D video image and the 3D microwave image are then transferred into a general coordinate system and overlapped (described in further detail hereinafter). The viewpoint, or perspective, of the system **1** as shown in Fig. 1 is from the position of the person being monitored.

Sometimes it is referred to an emitter or emitting antenna and sometimes to a transmitter or transmitting antenna herein. The terms emitter/emitting antenna/transmitter/transmitting are all interchangeable if nothing else is obvious to the skilled person from the specific context where the terms are used.

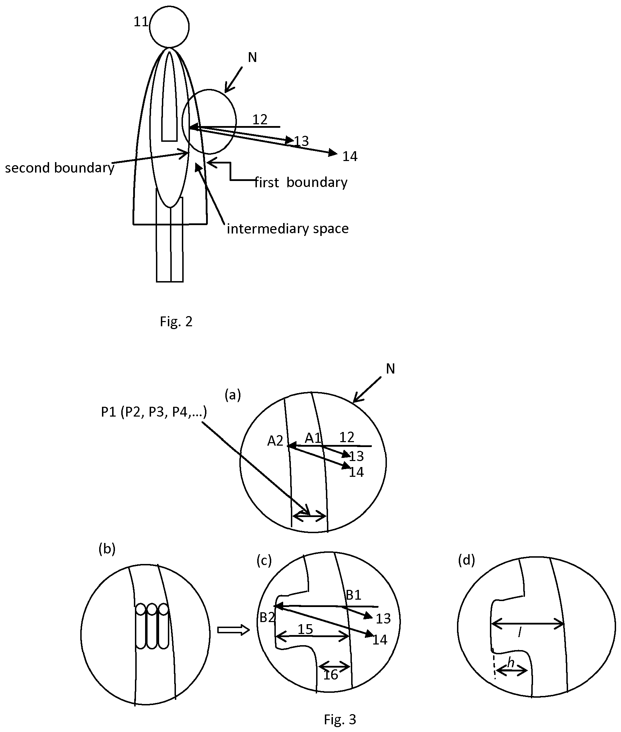

**3D Microwave Imaging.** Determining the presence of a potentially hazardous object carried by a target **11** is done in the following manner (Fig. 2). Some of the primary emitted MW radiation **12** is partially reflected by the first (outer) boundary (usually the person's coat/jacket/outer garment) forming a reflected beam **13** (see Fig. 3(a)-an enlarged view of area N-for greater detail). The same radiation/wave then travels through the coat until reflected by the second (inner) boundary, the human body, forming a second reflected beam **14.** Thus, at least two reflections of the same wave occur-one reflection occurs at the outer boundary of the target and/or object (i.e. the first border, or air/intermediary space border) and another reflection occurs after the wave travels through the intermediary space and reflects off the target's body (i.e. the opposite side of the hidden dielectric object, if present). The measured distance **P1** of the intermediary space between the first and second boundaries is recorded and used to detect the presence of hidden objects , P1= (A2-A1) is the distance between the point A2 on the second boundary and corresponding point A 1 on the first boundary. This process is repeated for measuring of at least one other distance or continuously for measuring of other distances, allowing microwave beams to hit and reflect off of various locations along the first and second boundaries. Each additional microwave beam that reflects off additional locations along the first and second boundaries **B1**, **C1**, **D1**,... and **B2, C2, D2,...** allows for measurement of additional distances **P2, P3, P4,...** between first and second boundaries. With microwave signals being emitted and received continuously, 3D microwave images of the inspected area are created. The first 3D MW image corresponds to the first boundary, and the second 3D MW image corresponds to the second boundary. The method allows determining the presence of hidden dielectric objects on the human body under the outer garment or carried by the person. Area N is enlarged and shown in greater detail in Fig. 3(a). Fig. 3(a) represents a situation without a hidden object. Fig. 3(b) illustrates how an explosive might be worn on the body under a coat. In a preferred embodiment of the present invention, the hidden objects are explosive materials or components thereof. In one embodiment the method of the present invention is used to unveil hidden suicide bombs in a crowd of moving people. The dielectric constant of explosives is about three. The MW radiation traveling through a medium with such a high dielectric constant is equivalent to traveling a longer distance in air and thus the microwave image of a hidden object is portrayed as a cavity protruding into the body, as illustrated by Fig. 3(c). This seemingly longer distance corresponds to a sharp change of the microwave beam path length, which is detected by the receivers because the MW beam in a first area **15** contains extra path gain compared to the MW beam in a second area **16.** By measuring the phase and amplitude of incoming reflected microwaves, the microwave path (i.e. the path of the microwave beam/signal) can be determined and the sudden sharp change of the path in certain areas, if present, is registered. Because a microwave travels more slowly in an object with a higher dielectric (permittivity) constant, a second border signal takes longer to arrive in the presence or area of an object (compared to areas where no object is present, e.g., just above, below, or to either side of an object.). If the change in path value exceeds a preset threshold value, it serves as an indication that a hidden object is present.

In the preferred embodiment, the threshold value is about 1 cm. In a further preferred embodiment the resolution is equal to 1 cm. The resolution depends on the bandwidth of the MW frequencies used. The resolution is equal to the speed of light in vacuum divided by the doubled bandwidth of the MW frequencies used. Bandwidth of the MW frequencies is typical 15 GHz, which thus means 1 cm resolution in depth.

The additional path, *h* (see Fig. 3(d)), is equal to *h* = *l((ε*^{*1*/}*² -1)*/*(ε*^{*1*/}*²)),* where *l* is the thickness of the intermediary space , which equals the distance from the first boundary to the second boundary including the cavity, if present, as shown by the first area **15** (see Fig. 3(c)), and ε is the dielectric (permittivity) constant of the intermediate space. The additional path, *h,* is calculated by subtracting the measured value of the second area **16** from the measured value of the first area **15.**

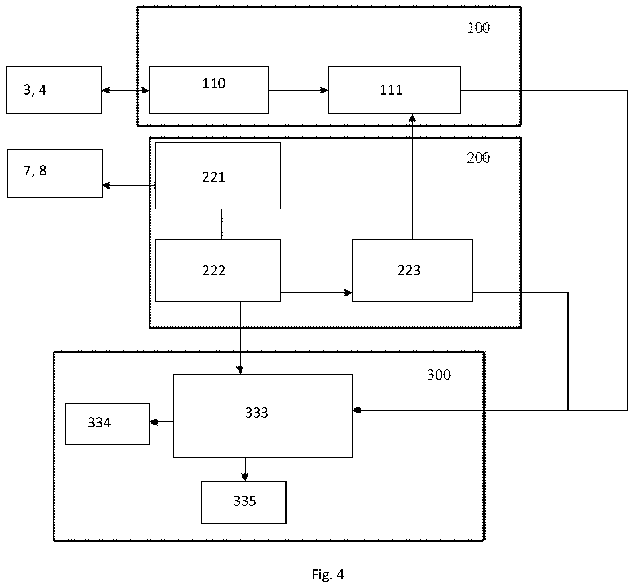

The first and the second border signals can be used to reconstruct two 3D MW images of a person, one corresponding to the outer garment and the other corresponding to the human body, as described above. However, the signal received from the first border of an interrogated space, due to its small value, may be disrupted by the side lobes (i.e. secondary maximums) of the signal from the second border. Preferably, a synchronized video image border can additionally be used, if the signal/noise ratio is low (see Figs. 1 and 4).

MW radiation can be emitted from various different angles and the reflected radiation, also travelling from various different angles, is similarly processed, allowing for accumulation of additional data to improve the accuracy and resolution of the image and detection process. Various configurations of setups are described further below.

**Simultaneous 3D Video and MW Imaging.** Additionally, a 3D video image of the target can be recorded at the same time of a MW image. In this preferred embodiment, the method of the invention thus further comprises forming a 3D optical range image of the interrogated person, synchronizing the 3D optical range image with a 3D MW image at the same point in time, and superimposing the 3D optical range image with the first 3D MW image, thus improving accuracy of determining the presence of hidden dielectric objects. Similarly, in the invention a system as described before is preferred which further comprises at least two cameras recording optical images of the interrogated person and forming a 3D optical range image of the interrogated person; and a computer for synchronization in time and superimposition in digital space of the 3D optical range image with the 3D MW image reflects off a first boundary, thus improving accuracy of determining the first boundary position and advancing detection of hidden objects. The reflection signal from the first boundary (points A1 and B1) may be few times weaker compared to the reflected signal from the second boundary (points A2 and B2). Points (A1', B1') from the first boundary extracted from a 3D optical image of the first boundary of the interrogated person (delivered by stereo cameras) can be used to calculate P1' and P2' and compare with P1 and P2.

Preferably, more than 100 microwave sources are used in the method of the present invention to form 3D images. It is also preferable to use microwave sources which have a spectrum comprising multiple frequencies.

Preferably, at least two video cameras **7** and **8** (see Fig. 1) record images of the target, and the DSP unit **5** reconstructs a 3D video image of the object. Optical beams do not penetrate the outer boundary (i.e., the person's outer garment in the example herein). This 3D video imaging is synchronized in time with the 3D microwave imaging. Overlapping the 3D video image over the 3D MW image of the outer border can achieve improved accuracy of the position of the outer border and improved calculation of the additional path, *h*. In one embodiment, the system is additionally equipped with an automatic alarm, which triggers a sound or a visual alert if the distance *h* is above a predetermined threshold value and thus the presence of a hidden object(s) is suspected.

In another embodiment, the automatic alert is combined with a photo of the suspected person, his/her coordinates, and the location of the hidden object(s) detected on his/her body, to security officers and first responders. The resolution of the system is sufficient to detect potentially hazardous objects on the human body without violating any privacy issues.

In yet another embodiment, the microwave image processing software creates an alert for only those parts/objects of targets which raise concern (i.e. create an alarm in the system due to microwave image detection). And finally, only those parts/objects of targets which raise concern are extracted from the video image by the processing software. Thus, without reconstructing the entire inspection area, to spare resources and time, the processing software creates a 3D microwave image with a superimposed 3D video image of only those parts/objects and areas of significance to security and the detection of potential threats.

**Setup Configurations.** The AMD can be produced and set up in different geometries including: (1) as a walk-through portal inspecting multiple moving persons (preferably in a manner where the persons are not shadowing one another, i.e. one by one, or side by side); or (2) as a single module for stand-off inspection of multiple moving targets. The AMD can be used in a mass-transit environment in various scenarios and as a stand-alone system or in combination with other sensors, video tracking, and data fusion systems. The AMD can be used in combination with automatic doors (for example, revolving entrance doors) or gates, which could be instantly closed when a real-time automatic alert is received from the AMD. The scenario also allows for separating instantly suspicious persons from other people. In one embodiment of the present method for unveiling hidden objects in an interrogated space, the interrogated person is standing or it is moving at the average pedestrian speed of at least 2 km/h, or at least 5 km/h.

The advantages of the present invention include, but are not limited to: (1) Standoff detection at a distance (for example, 10 meters); (2) Real-time inspection of targets (ten or more frames per second); (3) Inspection of many targets at a time (at least 4-5 at a time); (4) Covert inspection and installation (the device can be masked, e.g., as an advertising panel); (5) Safe operation and radiation (the total microwave power is 30 times less than that allowed in a public area); (6) Specificity to dielectric objects (the dielectric constant of an explosive is about or above 3, while innocent goods have a constant of less than 2.5); (7) Specificity to metallic objects; (8) Provides alert level associated with a discovered object; (9) Automatic threat recognition (ATR); (10) Not an invasion of privacy (the resolution of the 3D microwave image is low, and the ATR does not need to display a 3D image); (11) an optional 3D video system; and (12) Simultaneous real-time inspection of the body and any carried luggage (e.g., hand luggage, luggage with wheels moved by handle, etc.).

Figure 4 provides a diagram detailing a preferred algorithm used by the processing software. This algorithm ultimately issues an alarm for potentially threatening dielectrics or other explosives attached to and hidden on a given inspected target, which is used to create a reconstructed microwave image with a video image superimposed for correlation, detection, and faster location and acquisition of a hazardous material. There are three units which receive, process, and/or send information. The microwave data processing unit **100** is comprised of a data acquisition center **110** and a 3D microwave image restoration center **111.** The stereo video data processing unit **200** is comprised of a video data acquisition center **221,** a 3D video image restoration center **222,** and a target area definer **223.** The analysis and decision-making unit **300** is comprised of an image analyzing center **333** and alarm **334** or no-alarm **335** centers. Receiving antennae **3, 4** receive microwave data reflected from and/or transmitted through a target in an inspection zone. The receiving antennae **3, 4** share this data with the microwave data acquisition center **110,** which, in turn, further sends the data to the 3D microwave image restoration center **111.** Simultaneously, stereo video data captured by video cameras **7, 8** is shared with the video data acquisition center **221,** which, in turn, sends the video data to the 3D video image restoration center **222.** The 3D video image restoration center **222** then sends the video data through the target area definer **223.** The target area definer **223** communicates with the 3D microwave image restoration center **111** in order to correspond (or synchronize) microwave data with video data, thus allowing for release of information regarding the same time span, sending this synchronized data to the analysis and decision-making unit **300.** Common analysis of 3D microwave images and 3D video images occurs in the image analyzing center **333,** which receives data from the 3D video image restoration center **222** of the stereo video data processing unit **200** (both before and after the video data is filtered by the target area definer **223**) as well as from the 3D microwave image restoration center **111** of the microwave data processing unit **100.** Finally, the image analyzing center **333** determines, based on all acquired data and using the methods described herein, whether an alarm is signaled **334** or no alarm is signaled **335.**

**Automated Threat Recognition (ATR).** An alarm is signaled if, after analyzing the volume, mass, shape, and dielectric constant of an object or objects detected on target, e.g., hidden under the clothes or in luggage, a parameter or the combination parameters exceeds or lies within the boundaries of established or preset limits and thresholds. The alarm signal is sent automatically after processing 3D microwave (and video images) without the need for an operator. The alarm can be sent using wireless networks, cable networks, and mobile networks, to a given display/computer of any surveillance, security, or complex video tracking system. In addition to the automatic alarm, a photo/video image of any potential threat (and person who carries this threat) can be transmitted in real time, with the coordinates of his/her location.

**Standoff detection at a distance (up to 10 meters).** In order to obtain a minimal microwave image, at least one transmitting and two receiving antennas are required, or vice versa, i.e., one receiving and two transmitting antennas. In order to detect objects hidden on targets moving at distance, an array (or plurality), rather than one set, of transmitting and receiving antennas is recommended. The array of transmitting and receiving antennas widens the inspection zone, increases system resolution by increasing the system's aperture, and improves signal/noise correlation. For example, one embodiment of the antenna array comprises 256 elements which are combined into 16 lines of antennas. Each line includes 16 elementary antennas (16x16). This array also includes separate antennas preferably located at a distance which is less than half the wavelength at the maximum frequency of a used band of frequencies. This is necessary for unequivocal reconstruction of 3D microwave images.

The emission of the elementary antenna is continuous (or impulsive). The reflected signal is received simultaneously by all receiving antennas. In the case of several emitting antenna arrays being used, working simultaneously, low frequency modulation is used to distinguish signals coming from the different emitting antenna arrays. To improve the signal/noise ratio, one elementary antenna from the antenna array can emit, at one moment, one of the 16/32 chosen frequencies. The width of emitted lines is narrow (i.e., the width is 3 orders less than the frequency value), which allows the signal to not coincide with external and background frequencies.

The receiving antenna array includes separate antennas located in positions such that the zone/area where reflected signals are received (antenna perspective) allows one to get a 3D microwave image from different sides (or aspects) of the moving target(s). The quantity of separate antennas is determined by the desired quality of the synthesized aperture, resolution, signal/noise rate, and resources. In real time, the 3D microwave image reconstruction speed can be about 10 frames/images per second. The recording speed of amplitude-phase distribution data from all pairs [1024x8] of transmitting-receiving antennas and at all 16/32 chosen frequencies allows for consideration of moving targets as almost or quasi static during the time of one frame recording. The speed of data processing and 3D microwave image (frame) reconstruction is determined by the available resources. The attained speed of 10 frames/images per second is e.g. achieved due to the distribution of computational resources among different processors (and parallel computing), which work simultaneously but on different tasks, which can comprise the data acquisition process, 3D microwave image reconstruction and processing, and 3D video image processing and synchronization.

**Real time inspection and detection rate.** Explained here are exemplary conditions for and rate of data acquisition and processing for a moving target monitored by the present invention: The time needed to measure one frame (i.e., to get the amplitude-phase distribution data from all pairs [1024x8] of transmitting-receiving antennas and at all 16/32 chosen frequencies to reconstruct the 3D microwave and 3D video images in this embodiment) should be less than the time needed for a target to move at 1/8 of the wavelength at the maximal frequency of the used frequency range. The time for one frame measurement is less than 2 milliseconds. Frame processing (reconstruction into 100x100x32 (HxWxD) of points on the 3D microwave and 3D video images) takes about 100 milliseconds. One-eight (1/8) of the wavelength at the maximal frequency (i.e., 18 GHz or 1.6 cm) is about 0.2 centimeters. The average speed of the movement of a target is e.g. 5 km/h (or 1.4 m/s, or 0.14 cm/ms). At the present speed of data acquisition and processing, the present invention can create about 10 frames per second.

**Inspection of many targets simultaneously.** If there are several targets within or moving through the inspection area, the system operates and data acquisition is performed in the same manner, taking the same amount of time as for one target. However, when the system is performing 3D microwave and 3D video image reconstruction, it locates automatically all targets and objects within the inspection area, thus requiring more computational resources. Thus, the 3D microwave and 3D video image reconstruction is preferably performed, still in real time, by adjusting a particular quality, speed, or resolution to maintain computational speed. For example, computational speed can be maintained by lowering the reconstructed frame frequency (e.g., adjusting from 10 frames per second to 5 frames per second), or by lowering the number of points of the reconstructed microwave images. Alternatively, increasing computational resources would resolve the issue of many simultaneous targets without the need for lowering any particular quality, speed, or resolution. Use of the video data can also help to lower the volume of microwave data actually processed (e.g., inspecting only the area where objects are detected), thus performing separate inspections simultaneously for each target detected.

An alarm is signaled after analysis within the analysis and decision-making unit. The unit analyzes several frames stored in the computer's memory and singles out targets with "dangerous" objects. A "history" of frames is continuously built and stored in the computer memory. Each frame or group of frames has a time stamp showing when it was taken. An alarm is signaled and sent automatically in real time. A possible delay of a fraction of a second, compared to the time when the frame was received, might occur if several frames from the history are processed. The "history" of frames remains on the computer memory for the time during which targets remain or move within the inspection area. If there is no one inside the inspection area at a given moment, the system operates in "stand-by" mode. The system automatically switches to data acquisition mode and begins processing data as soon as a target(s) enters the inspection area. When target(s) are moving inside the inspection area (at a distance of up to 10 meters from the device), the system, on average, takes, reconstructs, and records into the "history" about 100 frames (the speed is 10 frames per second). A target (e.g., a person) in these frames is shown from different aspects as he/she was "seen" by the antenna during his/her movement. If the target moves during the processing of the frames, where the processing includes those frames from the recorded "history" of frames, hidden objects can be detected-objects that cannot be detected if the person is standing in place.

**Covert inspection and installation.** To make the operation of the device unnoticeable, the system can be masked as a typical advertising panel. The panel can be made of materials that are penetrated by microwaves (e.g., plastic, wood, fabric, etc.).

**3D video system.** A 3D video system is preferred to be used in the present invention. At least 2 video cameras are preferably used, allowing for reconstruction of a "depth map" of the inspection space in real time. The depth map is used together with 3D microwave images in processing and forming a common, synchronized 3D coordinate system. The 3D video image is used to: (1) detect/locate people inside the inspection area; (2) locate and limit specific areas/space within the inspection zone, where the microwave image of targeted objects (e.g. objects hidden on a person's body or in luggage) has to be reconstructed, processed, and/or synchronized; (3) obtain the first border (i.e., the air/dielectric border) on the microwave image, which is the same as the video image "clothes/dielectric border;" (4) transmit to responding officers an automatic alarm signal and photo/video data about a potential threat (e.g. terrorist) including, but not limited to, his/her space coordinates. The photo/video images can be colored or black and white. While a target(s) is (are) moving inside the inspection area or microwave/video system's operation area, the computer can store, in its memory, microwave and video images (e.g. 10 frames per second) received by the system from different viewing angles or aspects. This information is better and more useful than information about static (non-moving) targets inside the inspection area. The detection algorithm uses the moving target (i.e. better) information to analyze several frames stored in the history of frames. The more frames there are, employing different viewing angles, the more information the system has to automatically detect dangerous objects, and the more effective and accurate the detection procedure will be.

**AMD configuration options.** The present invention can operate (1) continuously or (2) in "stand-by" mode, activated by an external trigger (e.g., when a target enters the inspection area or a microwave/video system's operational area). The device can operate indoors or outdoors and in different light conditions (e.g., if there is little light, IR-cameras can be used). The system can be set up employing different configurations (transmitting and receiving antenna arrays can be located differently relative to each other) depending on the specific scenario of its use in certain places.

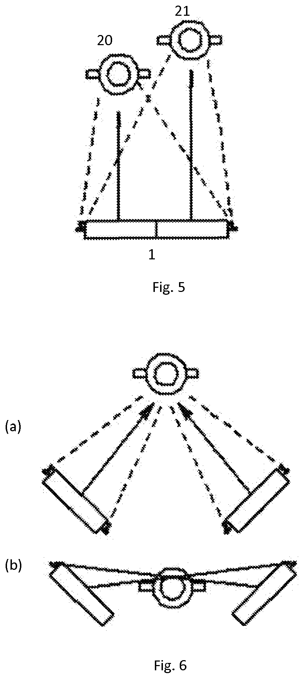

The "plane" configuration (see Fig. 5) refers to the transmitting and receiving antenna arrays being fixed on one frame or module of the setup 1. In "plane" configuration, the system uses only one technology to detect potentially dangerous objects, hidden on a target or in the luggage (e.g., backpack, bag, suitcase, etc.), the technology being "reflection" of the primary radiation (emitted by the microwave antenna arrays) off the target. In "plane" configuration, the inspection area is wider than in the "portal" configuration (explained below), thus potentially making it more useful for standoff detection of dangerous objects on one person **20** or several persons **20** and **21** simultaneously at a distance of several meters. Using the "plane" configuration, a 3D MW image can be constructed, and calculation of the presence of a hidden dielectric object depends on the phase difference between reflections off the first and second borders of a target. It should be noted that more sets of microwave signal receivers and transmitters, located at different angles to the inspection area and targets, will yield more accurate and more informative results.

The "portal" configuration (see Fig. 6) refers to the receiving and transmitting antennas being located on both sides of a so-called portal (i.e. a walk-though area), positioned at an angle towards the direction of movement of the target(s). In this configuration, the system uses two technologies to detect potentially dangerous objects hidden on a target or in luggage. The first technology is "reflection" of the primary radiation (emitted by the microwave antenna arrays) off of the target(s), and the second technology is "transmission" of the primary microwave radiation through the object. Figure 6(a) shows how the "reflection" technology is employed, while Figure 6(b) shows how the "transmission" technology is employed. With reflection technology, the detection of hidden objects is performed in a way similar to that of a plane configuration (i.e. based on the difference between phases of reflected microwaves). With transmission technology, the microwave signal will travel through a hidden dielectric object, if present, and thus no reflection of microwaves occurs. Instead, signal receivers/detectors are set up opposite signal transmitters in order to receive a microwave transmitted through a hidden dielectric object located on the body or in luggage. The detection of an object and thickness calculation is achieved by measuring the phase delay, if any, of a wave passing through the object. No 3D MW image is constructed based on transmission technology; instead, it simply measures the phase delay of microwaves travelling through hidden objects, if present. The phase delay is caused by the microwave transmission through a medium with a high dielectric constant (e.g., about 3 for explosive materials). It should again be noted that more sets of microwave signal receivers and transmitters (e.g., other than directly perpendicular to the direction of a moving target), located at different angles to the inspection area, will yield more accurate and more informative results.

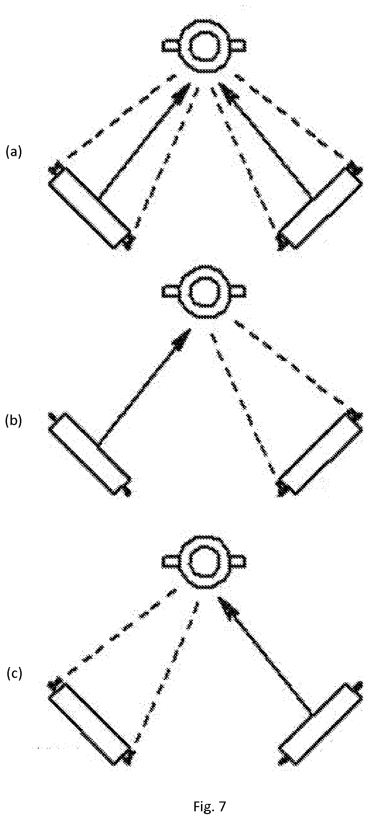

In the "portal" configuration, the detection algorithm uses processes data from both technologies. The system can signal the alarm using data received from only one of the technologies (transmission or reflection), or alternatively, the system can signal using a common alarm, which is determined by "OR" logic applied to both signals (if there is an alarm signal for one of the technologies). The detection algorithm simultaneously uses data from one or several microwave images created by the "reflection" mode. Different microwave images are formed while a signal is emitted/received by emitting/receiving antennas located on one half of a given portal unit, either from the left-hand side or from the right-hand side relative to the direction of the movement of the target(s). Crossover microwave images are formed while the signal is emitted/received by emitting/receiving antennas located in the different blocks (halves of the portal unit). When the left-hand side emits, the right-hand side receives the signal, and vice versa (see Figure 7).

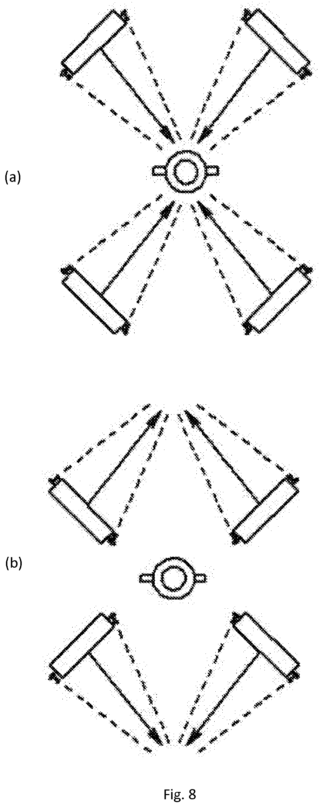

Using several microwave images during the analysis (received from the left and right sides of the portal and from crossover images) allows for more viewing angles of a target (e.g., human) body and hidden objects, increasing the accuracy of the automatic alarm signal and detection rate. This way, the system can detect objects that can't be seen by just one of the portal's halves, for example from the back, from a side, or from the front side of a target. In the "portal" configuration, the detection algorithm allows one to detect simultaneously objects located on the side or on the front side of the target in "reflection" mode, and from the back and front sides of the target in the "transmission" mode. In the "portal" configuration with a double number of emitting/receiving antenna arrays (see Figure 8), located in pairs from different sides (i.e., from the left and right) relative to the direction of the movement of a target, images of targets are received from different viewing angles and from all sides (front, back, left, and right). The detection algorithm allows one to detect objects on the sides or on the front and back sides of the body in "reflection" mode and on the front/back sides of the body in "transmission" mode. In this case (Figure 8), the quantity of single and crossover images increases, and so does the accuracy of the automatic alarm signal and detection rate. Objects hidden in any place on the body can be detected (i.e., a pseudo-3D holographic image).

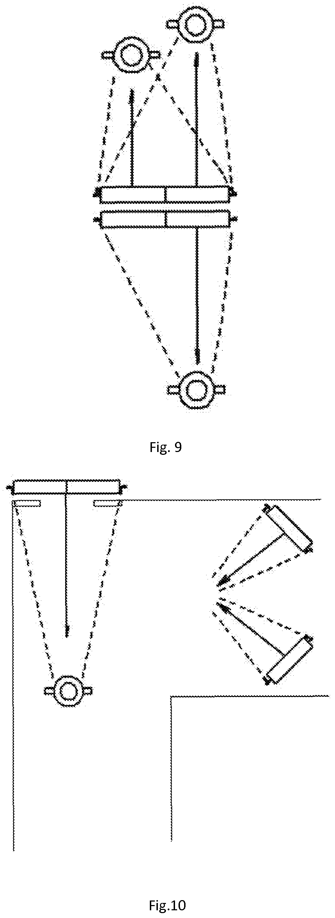

In "plane" configuration employing a double number of emitters/receivers, where the first and the second units are emitting/receiving microwave radiation in different directions, dangerous objects on the front side of a target are detected when the target is moving towards the system, while objects on the back side of the body (e.g. in the backpack) are detected as the target is moving away from the system. In this type of "plane" configuration, detection is performed from the front and from the back sides simultaneously (see Figure 9).

Additionally, scenarios might exist where the two configuration modes are used together and in combination (i.e. at least one portal configuration, and at least one plane configuration). The following two embodiments provide examples of, but in no way limit, how the plane and portal mode systems can be combined for further detection:

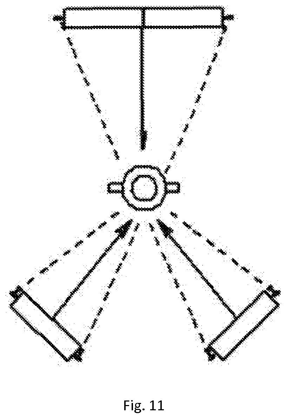

In a "plane" configuration, primary standoff detection of dangerous objects on the body of the moving person is performed. An automatic alarm signal is sent to a "portal" system, which, using the two technologies (reflection and transmission), inspects either all targets in the inspection area or only those targets singled out by the "plane" configuration system. In this scenario (see Figs. 10 and 11, for examples of various setups), the probability and accuracy of dangerous object detection increases and the false alarm rate is low. A low false alarm rate is a very important aspect, especially for detection systems operating in mass transportation facilities or areas with high passenger flow. A high false alarm rate would potentially fully disable the operations of a public transport hub, ruin a public event, etc.

In a "portal" configuration, primary detection of dangerous objects hidden on the front and back sides of a moving target is performed using the two technologies (reflection and transmission). An automatic alarm signal is sent to a "plane" system, which performs a secondary inspection, either of all targets in the inspection area or only of those targets singled out by the "portal" system. In this scenario (see Figs. 10 and 11, for examples of various setups), the probability and accuracy of dangerous object detection also increases, and the false alarm rate is similarly low. To implement this type of scenario, after the system in "portal" configuration, an automatic door, gate, barrier, etc., could be positioned to divide people into two flows. The first flow would include targets on which the first system detected dangerous objects, and those targets would be sent to a second system employing the other configuration ("plane" or "portal") for a secondary inspection.

When several systems in the "plane" and "portal" configurations are operating simultaneously in different parts of an inspected area (e.g., in transit stations or public event entrances) and detect a dangerous object, an automatic alarm signal is sent to the central control panel of the security system. Together with the alarm signal, the number of the responding device, photo/video images, and the coordinates of the suspicious target are transmitted. For specific cases, the system can be equipped with special mechanical devices, doors, revolving doors, barriers, etc., which can be used to automatically block, reroute, separate, or sequester suspicious targets/persons if an alarm is signaled. The more systems there are, all of which are coordinated with and connected to one control and data processing unit, the more effectively data processing resources can be distributed and the higher the probability and accuracy of detection will be, while also minimizing false alarms.

In a preferred method of the present invention, MW radiation emitted by a transmitter and travelling through the interrogated space without any reflection from the two layers is used to improve the accuracy of the method by registering at an additional receiver the amplitude and phase of the MW radiation that travels through the interrogated space without reflection, wherein the amplitude and phase of the MW radiation that travels through the interrogated space is used to determine a change of optical length of the MW radiation that travels through the interrogated space compared to MW radiation that travels through free space between the transmitter and the additional receiver.

The system according to the present invention also preferably comprises an additional MW receiver registering a MW signal travelling through the interrogated space and the inner and the outer layer without reflection; and the alarm is adapted for indicating a likelihood of a hidden dielectric object between the inner and outer layer, if the additional receiver has registered an increase (or change) of optical length of an incoming MW signal passed through the interrogated space, the increase of optical length caused by the presence of an object with an increased dielectric constant in the interrogated space.

**Safe operation and radiation.** The total microwave power of the present invention is 2 V/m (10 GHz), which is 30 times less than that allowed in a public area (61 V/m).

**Privacy concerns.** The resolution of the 3D microwave image is low and the ATR doesn't need to display the 3D image. To form the alarm signal automatically (ATR), it is not necessary for an operator to look through 2D/3D microwave or video images on the display manually. The microwave image resolution is e.g. about 4 cm (relative to the used frequency range) and it is impossible to show/record any parts of the body of a person located within the system's operational area.

**System resolution.** The system resolution in plane configuration is determined by an average frequency (13 GHz), the distance to the object, and a given aperture's dimensions (e.g., system resolution in plane configuration is 4x4cm at distance of 1 meter, not considering aperture synthesis). The system resolution in the direction perpendicular to the first and the second boundariesis determined by the bandwidth of the used frequency range (8-18 GHz) (e.g., system resolution in depth is 1 cm or 1.5 cm).

The description of a preferred embodiment of the invention has been presented for purposes of illustration and description. It is not intended to be exhaustive or to limit the invention to the precise forms disclosed. Obviously, many modifications and variations will be apparent to practitioners skilled in this art.

According to another embodiment of the present invention, the method further comprises using of MW radiation travelling through the intermediary space without any reflection from the human body by: registering an amplitude and phase a MW radiation travelled through the intermediary space without reflection from the human body; determining the presence of hidden dielectric object if a phase delay in the registered signal exceeds a phase threshold, the delay caused by passing the intermediary space with increased dielectric constant.

According to a further embodiment of the method of the present invention, the MW sources scan the area, thus forming images. According to another embodiment of the present invention, the method is used to inspect at least two interrogated persons simultaneously.

According to a further embodiment of this invention, the system further comprises:
an additional MW receiver registering a MW signal travelling through the intermediary space without reflection; and the alarm signaling a likelihood of the hidden dielectric object between the first and second boundaries if the additional receiver has registered a phase delay of an incoming MW signal passed through the intermediary space; the delay caused by the presence of an object with the increased dielectric constant in the intermediary space.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

## Claims

1. A method for unveiling hidden dielectric objects in an interrogated space, comprising:
sending microwave, MW, signals from at least two MW sources (2) towards an interrogated person (20),
the signal being partially reflected on a first boundary between air and an outer layer of an intermediary space, the remainder of the signal being almost fully reflected on a second boundary between the intermediary space and a human body,
receiving at a MW receiver (3, 4) a first and a second response of MW signals reflected back from the first boundary and the second boundary; the first and the second response signals being a first and a second 3D MW images of the interrogated person (20);
determining at least two optical paths, P1 and P2, between at least two sets of two points, where P1=(A2-A1) and P2=(B2-B1); where A1 is a point of a first MW beam reflecting from the first boundary, and A2 is a point of the same first beam reflecting from the second boundary, where B1 is a point of a second MW beam reflecting from the first boundary, and B2 is a point of the same second MW beam reflecting from the second boundary,
wherein the optical path is a path of microwave radiation in a medium of the intermediary space;
determining a presence of a hidden dielectric object between the first and second boundaries if the difference between P1 and P2 is greater than a threshold value due to an increased dielectric constant in the intermediary space between B2 and B1.

2. The method of claim 1, wherein the threshold value is about 1 cm.

3. The method of claim 1 or 2, further comprising forming at least a third and a fourth 3D MW image from a third and a fourth response signal; wherein the third and the fourth response signals are received from an angle different from that of the first and the second response signals, and determining at least two more optical paths, P3 and P4, where P3=(C2-C1) and P4=(D2-D1), where C1 is a point of a third MW beam reflecting from the first boundary, and C2 is a point of the same third beam reflecting from the second boundary, where D1 is a point of a fourth MW beam reflecting from the first boundary, and D2 is a point of the same fourth MW beam reflecting from the second boundary, thus increasing image quality and adding information for determining the presence of hidden dielectric objects.

4. The method of any of claims 1-3, further comprising using MW radiation travelling through the intermediary space without any reflection from the human body by:
using an additional MW receiver to register an amplitude and phase of MW radiation travelled through the intermediary space without reflection from the human body;
determining the presence of a hidden dielectric object if a phase delay in the registered signal exceeds a phase threshold, the delay caused by passing the intermediary space with increased dielectric constant.

5. The method of any of claims 1-4, further comprising forming a 3D optical range image of the interrogated person (20), synchronizing the 3D optical range image with a 3D MW image at the same point in time, and superimposing the 3D optical range image with the first 3D MW image, thus improving accuracy of determining the presence of hidden dielectric objects.

6. The method of any of claims 1-5, wherein the hidden objects are explosive materials or components thereof.

7. The method of any of claims 1-6, wherein the MW sources have a spectrum comprising multiple frequencies.

8. The method of any of claims 1-7, wherein the MW sources scan the area, thus forming images.

9. The method of any of claims 1-8, wherein more than 100 MW sources are used to form 3D images.

10. The method of any of claims 1-9, wherein a digital signal processor (5), DSP, performs a coherent processing, which calculates the 3D MW images, taking into account amplitude information and phase information of electromagnetic fields reflected from an interrogated person (20).

11. The method of any of claims 1-10, wherein the method is used to unveil hidden suicide bombs in a crowd of moving people.

12. The method of any of claims 1-11, wherein the method is used to inspect at least two interrogated persons (20, 21) simultaneously.

13. The method of any of claims 1-12, wherein the interrogated person (20, 21) is moving at a speed of at least 5 km/hour.

14. A system for unveiling a hidden dielectric object in an interrogated area, comprising:
at least two microwave, MW, sources (2) and at least one MW receiver (3, 4) forming 3D MW images of the interrogated area;
wherein said 3D microwave images are formed by emitting MW signals from the MW sources towards an interrogated person (20), where each MW signal partially reflects off a first boundary between air and an intermediary space and a remainder of the MW signals travels through the intermediary space, where the remainder of the MW signals almost fully reflects off a second boundary between the intermediary space and a human body of the interrogated person (20), where said MW receiver receives reflected signals from said first and second boundaries;
a computer/calculator (5) for determining at least two optical paths, P1 and P2, between at least two sets of two points, where P1=(A2-A1) and P2=(B2-B1); wherein A1 is a point of a first MW beam reflected from the first boundary, and A2 is a point of the same first MW beam reflected from the second boundary, wherein B1 is a point of a second MW beam reflected from the first boundary, and B2 is a point of the same second MW beam reflected from the second boundary, wherein the optical path is a path of microwave radiation in an intermediary space medium;
and an alarm for signaling a likelihood of a hidden dielectric object between the first and second boundaries if the difference between P1 and P2 is greater than a threshold value due to an increased dielectric constant in the intermediary space between points B2 and B1.

15. The system of claim 14, further comprising:
at least two cameras (7 and 8) recording optical images of the interrogated person (20) and forming a 3D optical range image of the interrogated person (20),
and a computer (5) for synchronization in time and superimposition in digital space of the 3D optical range image with the 3D MW image reflects off a first boundary, thus improving accuracy of determining the first boundary position and advancing detection of hidden objects.

16. The system of claim 14 or 15, further comprising:
an additional MW receiver registering a MW signal travelling through the intermediary space without reflection;
and the alarm signaling a likelihood of the hidden dielectric object between the first and second boundaries if the additional receiver has registered a phase delay of an incoming MW signal passed through the intermediary space; the delay caused by the presence of an object with the increased dielectric constant in the intermediary space.

17. The system of any of claims 14-16, wherein the hidden objects are explosive materials or components thereof.

## Patentansprüche

1. Verfahren zum Entdecken versteckter dielektrischer Objekte in einem abgefragten Raum, umfassend:
Senden von Mikrowellen-, MW-, -Signalen aus mindestens zwei MW-Quellen (2) zu einer abgefragten Person (20),
wobei das Signal an einer ersten Grenze zwischen Luft und einer Außenschicht eines Zwischenraumes teilweise reflektiert wird, wobei das übrige Signal fast vollständig an einer zweiten Grenze zwischen dem Zwischenraum und einem menschlichen Körper reflektiert wird,
Empfangen an einem MW-Empfänger (3, 4) einer ersten und einer zweiten Antwort von MW-Signalen, die von der ersten Grenze und der zweiten Grenze zurückreflektiert wurden; wobei die erste und die zweite Antwort ein erstes und ein zweites 3D-MW-Bild der verhörten Person (20) sind;
Bestimmen von mindestens zwei Strahlengängen, P1 und P2, zwischen mindestens zwei Gruppen von zwei Punkten, wobei P1 = (A2 - A1) und P2 = (B2 - B1); wobei A1 ein Punkt eines ersten MW-Strahls ist, der von der ersten Grenze reflektiert wird, und A2 ein Punkt desselben ersten Strahls ist, der von der zweiten Grenze reflektiert wird, wobei B1 ein Punkt eines zweiten MW-Strahls ist, der von der ersten Grenze reflektiert wird, und B2 ein Punkt desselben zweiten MW-Strahls ist, der von der zweiten Grenze reflektiert wird,
wobei der Strahlengang ein Gang von Mikrowellenstrahlung in einem Medium des Zwischenraums ist;
Bestimmen der Gegenwart eines versteckten dielektrischen Objektes zwischen der ersten und der zweiten Grenze, falls die Differenz zwischen P1 und P2 aufgrund einer erhöhten Dielektrizitätskonstante im Zwischenraum zwischen B2 und B1 größer ist als ein Schwellenwert.

2. Verfahren nach Anspruch 1, wobei der Schwellenwert etwa 1 cm beträgt.

3. Verfahren nach Anspruch 1 oder 2, ferner umfassend Erstellen mindestens eines dritten und eines vierten 3D-MW-Bildes aus einem dritten und einem vierten Antwortsignal;
wobei das dritte und das vierte Antwortsignal aus einem anderen Winkel als das erste und das zweite Antwortsignal empfangen werden, und Bestimmen von mindestens zwei weiteren Strahlengängen, P3 und P4, wobei P3 = (C2 - Cl) und P4 = (D2 - Dl), wobei C1 ein Punkt eines dritten MW-Strahls ist, der von der ersten Grenze reflektiert wird, und C2 ein Punkt desselben dritten Strahls ist, der von der zweiten Grenze reflektiert wird, wobei D1 ein Punkt eines vierten MW-Strahls ist, der von der ersten Grenze reflektiert wird, und D2 ein Punkt desselben vierten MW-Strahls ist, der von der zweiten Grenze reflektiert wird, wodurch die Bildqualität erhöht wird und Informationen zum Bestimmen der Gegenwart versteckter dielektrischer Objekte hinzugefügt werden.

4. Verfahren nach einem der Ansprüche 1 - 3, ferner umfassend die Nutzung von MW-Strahlungswanderung durch den Zwischenraum ohne jegliche Reflexion vom menschlichen Körper:
unter Nutzung eines zusätzlichen MW-Empfängers zum Erfassen der Amplitude und Phase der durch den Zwischenraum gewanderten MW-Strahlung ohne Reflexion vom menschlichen Körper;
Bestimmen der Gegenwart eines versteckten dielektrischen Objektes, wenn eine Phasenverzögerung im erfassten Signal eine Phasenschwelle übersteigt, wobei die Verzögerung durch die Durchquerung des Zwischenraumes mit einer erhöhten Dielektrizitätskonstante verursacht wurde.

5. Verfahren nach einem der Ansprüche 1 - 4, ferner umfassend Erstellen eines 3D-Sichtweitenbildes der abgefragten Person (20), Synchronisieren des 3D-Sichtweitenbildes mit einem 3D-MW-Bild zum selben Zeitpunkt und Überlagern des 3D-Sichtweitenbildes mit dem ersten 3D-MW-Bild, wodurch die Genauigkeit der Bestimmung der Gegenwart versteckter dielektrischer Objekte verbessert wird.

6. Verfahren nach einem der Ansprüche 1 - 5, wobei die versteckten Objekte explosive Materialien oder Komponenten davon sind.

7. Verfahren nach einem der Ansprüche 1 - 6, wobei die MW-Quellen ein Spektrum haben, das mehrere Frequenzen umfasst.

8. Verfahren nach einem der Ansprüche 1 - 7, wobei die MW-Quellen den Bereich scannen und so Bilder erstellen.

9. Verfahren nach einem der Ansprüche 1 - 8, wobei mehr als 100 MW-Quellen zum Erstellen von 3D-Bildern genutzt werden.

10. Verfahren nach einem der Ansprüche 1 - 9, wobei ein digitaler Signalprozessor (5), DSP, kohärente Verarbeitung durchführt, bei der die 3D-MW-Bilder berechnet werden, wobei Amplitudeninformationen und Phaseninformationen zu den von einer abgefragten Person (20) reflektierten elektromagnetischen Feldern berücksichtigt werden.

11. Verfahren nach einem der Ansprüche 1 - 10, wobei das Verfahren zum Entdecken versteckter Selbstmordbomben in einer sich bewegenden Menschenmenge verwendet wird.

12. Verfahren nach einem der Ansprüche 1 - 11, wobei das Verfahren zur Inspektion von mindestens zwei abgefragten Personen (20, 21) gleichzeitig genutzt wird.

13. Verfahren nach einem der Ansprüche 1 - 12, wobei sich die abgefragte Person (20, 21) mit einer Geschwindigkeit von mindestens 5 km/Stunde bewegt.

14. System zum Entdecken eines verstecken dielektrischen Objektes in einem abgefragten Bereich, umfassend:
mindestens zwei Mikrowellen-, MW-, -Quellen (2) und mindestens einen MW-Empfänger (3,4), der 3D-MW-Bilder des abgefragten Bereichs erstellt;
wobei die 3D-Mikrowellenbilder durch das Aussenden von MW-Signalen aus den MW-Quellen zu einer abgefragten Person (20) erstellt werden, wobei jedes MW-Signal teilweise von einer ersten Grenze zwischen Luft und einem Zwischenraum reflektiert wird und sich die übrigen MW-Signale durch den Zwischenraum bewegen, wobei die übrigen MW-Signale fast vollständig von einer zweiten Grenze zwischen dem Zwischenraum und einem menschlichen Körper der abgefragten Person (20) reflektiert werden, wobei der MW-Empfänger reflektierte Signale von der ersten und der zweiten Grenze empfängt;
einen Computer/Rechner (5) zum Bestimmen von mindestens zwei Strahlengängen, P1 und P2, zwischen mindestens zwei Gruppen von Punkten, wobei P1 = (A2 - A1) und P2 = (B2 - B1), wobei A1 ein Punkt eines ersten MW-Strahls ist, der von der ersten Grenze reflektiert wird, und A2 ein Punkt desselben ersten MW-Strahls ist, der von der zweiten Grenze reflektiert wird, wobei B1 ein Punkt eines zweiten MW-Strahls ist, der von der ersten Grenze reflektiert wird, und B2 ein Punkt desselben zweiten MW-Strahls ist, der von der zweiten Grenze reflektiert wird, wobei der Strahlengang ein Gang der Mikrowellenstrahlung in einem Zwischenraummedium ist; und
einen Alarm zum Signalisieren einer Wahrscheinlichkeit für ein verstecktes dielektrisches Objekt zwischen der ersten und der zweiten Grenze, wenn die Differenz zwischen P1 und P2 aufgrund einer erhöhten Dielektrizitätskonstante im Zwischenraum zwischen den Punkten B2 und B1 größer als ein Schwellenwert ist.

15. System nach Anspruch 14, ferner umfassend:
mindestens zwei Kameras (7 und 8), die Abbildungen der verhörten Person (20) aufzeichnen und ein 3D-Sichtweitenbild der verhörten Person (20) erstellen, und
einen Computer (5) zur Synchronisierung der Zeit und Überlagerung des 3D-Sichtweitenbildes mit dem von einer ersten Grenze reflektierten 3D-MW-Bild im digitalen Raum, wodurch die Genauigkeit der Bestimmung der Position der erste Grenze verbessert und die Erkennung versteckter Objekte verbessert wird.

16. System nach Anspruch 14 oder 15, ferner umfassend:
einen zusätzlichen MW-Empfänger, der ein MW-Signal erfasst, das sich ohne Reflexion durch den Zwischenraum bewegt;
und den Alarm, der eine Wahrscheinlichkeit für das versteckte dielektrische Objekt zwischen der ersten und der zweiten Grenze signalisiert, wenn der zusätzliche Empfänger eine Phasenverzögerung eines eingehenden MW-Signals erfasst, das den Zwischenraum durchquert hat; wobei die Verzögerung durch die Gegenwart eines Objektes mit der erhöhten Dielektrizitätskonstante in dem Zwischenraum verursacht wird.

17. System nach einem der Ansprüche 14 - 16, wobei die versteckten Objekte explosive Materialien oder Komponenten davon sind.

## Revendications

1. Procédé pour dévoiler des objets diélectriques dissimulés dans un espace interrogé, comprenant les étapes consistants à :
envoyer des signaux micro-ondes, MW, provenant d'au moins deux sources MW (2) vers une personne interrogée (20),
le signal étant partiellement réfléchi sur une première limite entre l'air et une couche extérieure d'un espace intermédiaire, le reste du signal étant presque totalement réfléchi sur une deuxième limite entre l'espace intermédiaire et un corps humain,
recevoir à un récepteur MW (3, 4) une première et une deuxième réponses de signaux MW réfléchis en retour par la première limite et la deuxième limite ; les premier et deuxième signaux de réponse étant une première et une deuxième images MW 3D de la personne interrogée (20) ;
déterminer au moins deux chemins optiques, P1 et P2, entre au moins deux ensembles de deux points, où P1 = (A2 - A1) et P2 = (B2-B1) ; où A1 est un point d'un premier faisceau MW se réfléchissant à partir de la première limite, et A2 est un point du même premier faisceau se réfléchissant à partir de la deuxième limite, où B1 est un point d'un deuxième faisceau MW se réfléchissant à partir de la première limite, et B2 est un point du même deuxième faisceau MW se réfléchissant à partir de la deuxième limite,
dans lequel le chemin optique est un chemin de rayonnement micro-ondes dans un milieu de l'espace intermédiaire ;
déterminer la présence d'un objet diélectrique dissimulé entre les première et deuxième limites si la différence entre P1 et P2 est supérieure à une valeur seuil en raison d'une augmentation de la constante diélectrique dans l'espace intermédiaire entre B2 et B1.

2. Procédé selon la revendication 1, dans lequel la valeur seuil est d'environ 1 cm.

3. Procédé selon la revendication 1 ou 2, comprenant en outre l'étape consistant à former au moins une troisième et une quatrième image MW 3D à partir d'un troisième et d'un quatrième signal de réponse ; dans lequel les troisième et quatrième signaux de réponse sont reçus sous un angle différent de celui des premier et deuxième signaux de réponse, et déterminer au moins deux chemins optiques supplémentaires, P3 et P4, où P3 = (C2 - C1) et P4 = (D2 - D1), où C1 est un point d'un troisième faisceau MW se réfléchissant à partir de la première limite, et C2 est un point du même troisième faisceau se réfléchissant à partir de la deuxième limite, où D1 est un point d'un quatrième faisceau MW se réfléchissant à partir de la première limite, et D2 est un point du même quatrième faisceau MW se réfléchissant à partir de la deuxième limite, augmentant ainsi la qualité de l'image et ajoutant des informations permettant de déterminer la présence d'objets diélectriques dissimulés.

4. Procédé selon l'une quelconque des revendications 1 à 3, comprenant en outre l'utilisation d'un rayonnement MW traversant l'espace intermédiaire sans aucune réflexion du corps humain par :
utilisation d'un récepteur MW supplémentaire pour enregistrer une amplitude et une phase du rayonnement MW traversant l'espace intermédiaire sans aucune réflexion du corps humain ;
détermination de la présence d'un objet diélectrique dissimulé si un retard de phase dans le signal enregistré dépasse un seuil de phase, le retard causé en passant dans l'espace intermédiaire avec une constante diélectrique accrue.

5. Procédé selon l'une quelconque des revendications 1 à 4, comprenant en outre la formation d'une image à portée optique 3D de la personne interrogée (20), la synchronisation de l'image à portée optique 3D avec une image MW 3D au même instant et la superposition de l'image à portée optique 3D avec la première image MW 3D, améliorant ainsi la précision de la détermination de la présence d'objets diélectriques dissimulés.

6. Procédé selon l'une quelconque des revendications 1 à 5, dans lequel les objets dissimulés sont des matières explosives ou des composants de celles-ci.

7. Procédé selon l'une quelconque des revendications 1 à 6, dans lequel les sources MW ont un spectre comprenant des fréquences multiples.

8. Procédé selon l'une quelconque des revendications 1 à 7, dans lequel les sources MW balayent la zone, formant ainsi des images.

9. Procédé selon l'une quelconque des revendications 1 à 8, dans lequel plus de 100 sources MW sont utilisées pour former des images 3D.

10. Procédé selon l'une quelconque des revendications 1 à 9, dans lequel un processeur de signal numérique DSP (5) effectue un traitement cohérent, qui calcule les images MW 3D, en prenant compte des informations d'amplitude et des informations de phase des champs électromagnétiques réfléchis à partir une personne interrogée (20).

11. Procédé selon l'une des revendications 1 à 10, où ce procédé est utilisé pour dévoiler des bombes-suicides dissimulées dans une foule de personnes en mouvement.

12. Procédé selon l'une quelconque des revendications 1 à 11, dans lequel le procédé est utilisé pour inspecter simultanément au moins deux personnes interrogées (20, 21).

13. Procédé selon l'une quelconque des revendications 1 à 12, dans lequel la personne interrogée (20, 21) se déplace à une vitesse d'au moins 5 km / h.

14. Système pour dévoiler un objet diélectrique dissimulé dans une zone interrogée, comprenant :
au moins deux sources micro-ondes (2), MW, et au moins un récepteur (3) MW formant des images MW 3D de la zone interrogée ;
dans lequel lesdites images micro-ondes 3D sont formées en émettant des signaux MW à partir de sources MW vers une personne interrogée (20), où chaque signal MW se réfléchit partiellement sur une première limite entre l'air et un espace intermédiaire et un reste des signaux MW traverse l'espace intermédiaire, où le reste des signaux MW se réfléchit presque complètement sur une deuxième frontière entre l'espace intermédiaire et un corps humain de la personne interrogée (20), où ledit récepteur MW reçoit des signaux réfléchis à partir desdites première et deuxième limites ;
un ordinateur / calculateur (5) pour déterminer au moins deux chemins optiques, P1 et P2, entre au moins deux ensembles de deux points, où P1 = (A2 - A1) et P2 = (B2 - B1) ;
dans lequel A1 est un point d'un premier faisceau MW réfléchi par la première limite, et A2 est un point du même premier faisceau MW réfléchi par la deuxième limite, dans lequel B1 est un point d'un deuxième faisceau MW réfléchi par la première limite, et B2 est un point du même deuxième faisceau MW réfléchi par la deuxième limite, dans lequel le chemin optique est un chemin de rayonnement micro-ondes dans un milieu d'espace intermédiaire ;
et une alarme pour signaler la probabilité d'un objet diélectrique dissimulé entre les première et deuxième limites si la différence entre P1 et P2 est supérieure à une valeur seuil en raison d'une augmentation de la constante diélectrique dans l'espace intermédiaire entre les points B2 et B1.

15. Système selon la revendication 14, comprenant en outre :
au moins deux caméras (7 et 8) enregistrant des images optiques de la personne interrogée (20) et formant une image à portée optique 3D de la personne interrogée (20),
et un ordinateur (5) pour la synchronisation dans le temps et la superposition dans l'espace numérique de l'image à portée optique 3D avec l'image MW 3D se réfléchit sur une première limite, ce qui améliore la précision de la détermination de la position de la première limite et de la détection avancée des objets dissimulés.

16. Système selon la revendication 14 ou 15, comprenant en outre :
un récepteur MW supplémentaire enregistrant un signal MW voyageant à travers l'espace intermédiaire sans réflexion ;
et l'alarme signalant la probabilité que l'objet diélectrique dissimulé se trouve entre les première et deuxième limites si le récepteur supplémentaire a enregistré un retard de phase d'un signal MW entrant passé par l'espace intermédiaire ; le retard causé par la présence d'un objet avec la constante diélectrique accrue dans l'espace intermédiaire.

17. Système selon l'une quelconque des revendications 14 à 16, dans lequel les objets dissimulés sont des matières explosives ou des composants de celles-ci.
